# EUROPÄISCHE PATENTANMELDUNG

(11) **EP 4 296 098 A1**
(43) Veröffentlichungstag der Anmeldung: **27.12.2023**
(21) Anmeldenummer: 23020272.3
(22) Anmeldetag: 02.06.2023
(51) Int. Cl.: B60J 10/34, B60J 10/248

(54) **DICHTUNGSPROFIL, VERFAHREN ZUR HERSTELLUNG EINES DICHTUNGSPROFILS UND MONTAGEVERFAHREN**

(30) Priorität: 20.06.2022 DE 102022115292
(71) Anmelder: CQLT SaarGummi Technologies S.à.r.l., 5544 Remich (LU)
(72) Erfinder: Müller, Sven, 72764 Reutlingen (DE); Wolny, Andreas, 66280 Sulzbach (DE); Grüter, Achim, 66780 Rehlingen-Siersburg (DE); Kotz, Stefan, 66663 Merzig (DE)
(74) Vertreter: Patentanwälte Bernhardt / Wolff Partnerschaft mbB

(57) **Zusammenfassung**

Die Erfindung betrifft ein Dichtungsprofil (1), insbesondere zur Abdichtung einer Fahrzeugtür gegenüber einer Türöffnung einer Karosserie, mit einem Befestigungsabschnitt (2) und mindestens einem Dichtungsabschnitt (3). Um eine einfache Herstellung und zudem eine besonders stabile und undurchlässige Befestigung an einer Fahrzeugkarosserie zu ermöglichen, weist der Befestigungsabschnitt (2) einen Klebstoff (9a; 9b) auf.

## Beschreibung

Die Erfindung betrifft ein Dichtungsprofil nach dem Oberbegriff des Anspruchs 1, ein Verfahren zur Herstellung eines Dichtungsprofils sowie ein Montageverfahren.

Durch Benutzung sind Dichtungsprofile zur Abdichtung einer Fahrzeugtür gegenüber einer Türöffnung einer Karosserie bekannt, welche einen Befestigungsabschnitt und mindestens einen Dichtungsabschnitt umfassen. Der oftmals U-förmige Befestigungsabschnitt weist an der Innenseite der Schenkel vorstehende Haltelippen auf, welche bei einem Aufstecken des Dichtungsprofils beispielsweise auf einen Karosserieflansch angedrückt werden und damit das Dichtungsprofil kraftschlüssig halten.

Aufgabe der Erfindung ist es, ein Dichtungsprofil bereitzustellen, welches einfach herzustellen ist und zudem eine besonders stabile und undurchlässige Befestigung an einer Fahrzeugkarosserie ermöglicht.

Diese Aufgabe wird dadurch gelöst, dass der Befestigungsabschnitt einen Klebstoff aufweist. Bei dem Klebstoff kann es sich um einen 1-Komponenten-Klebstoff oder einen Mehrkomponenten-Klebstoff mit räumlich getrennt angeordneten Komponenten, insbesondere einer Klebstoff- und einer Aktivierungskomponente, handeln. Bei einem Mehrkomponenten-Klebstoff erfolgt die Aktivierung durch das Auflösen der räumlichen Trennung und ggf. Durchmischung der Komponenten. Beispiele für einen Mehrkomponenten-Klebstoff sind Kunstharze wie Epoxid- oder Polyesterharze, bei welchen die Aktivierung und Aushärtung erst nach einem Durchmischen der Harz- und Härterkomponente erfolgt. Der Klebstoff an dem Befestigungsabschnitt ermöglicht somit eine besonders stabile und undurchlässige Befestigung des Dichtungsprofils.

In einer bevorzugten Ausführungsform kann der Befestigungsabschnitt im Querschnitt U-förmig oder L-förmig ausgebildet sein, wobei der Klebstoff vorzugsweise an einer Innenseite eines Schenkels vorgesehen ist. Ein Dichtungsprofil mit einem derartigen Befestigungsabschnitt kann besonders einfach auf ein Karosseriebauteil wie einen Karosserieflansch aufgesteckt bzw. daran angedrückt werden.

Um den Klebstoff vor äußeren Einflüssen zu schützen und gegebenenfalls ein frühzeitiges Aushärten zu verhindern, kann der Befestigungsabschnitt mindestens eine Hohlkammer aufweisen, in welcher der Klebstoff bzw. mindestens eine Komponente des Mehrkomponenten-Klebstoffs angeordnet ist. Die Wand der Hohlkammer kann aus dem gleichen Material wie der übrige Befestigungsabschnitt, insbesondere aus einem thermoplastischen Material wie beispielsweise Polypropylen oder einem thermoplastischen Elastomer wie EPDM bestehen und vorteilhaft während der Extrusion des Befestigungsabschnitts gebildet werden.

Um einen einfachen Austritt von Klebstoff zu ermöglichen, kann die mindestens eine Hohlkammer eine Austrittsöffnung oder eine Sollbruchstelle aufweisen, durch welche kontrolliert Klebstoff austritt, wenn Druck auf die Hohlkammer ausgeübt wird. Als Sollbruchstelle kann auch ein vergleichsweise dünnwandiger Abschnitt der Hohlkammerwand vorgesehen sein, welcher einen frühzeitigen Austritt von Klebstoff sowie ein Austrocken und Verschmutzen des Klebstoffs verhindert.

Vorteilhaft weist der Befestigungsabschnitt mindestens zwei Hohlkammern auf, in welchen je eine Komponente eines Mehrkomponenten-Klebstoffs angeordnet ist. Jede Hohlkammer kann dabei eine Austrittsöffnung bzw. eine Sollbruchstelle aufweisen, welche vorzugsweise in einander zugewandten Wandabschnitten der Hohlkammern angeordnet sind. Hierdurch kann bei Verwendung eines Mehrkomponenten-Klebstoffs besonders einfach gewährleistet werden, dass erst mit Vermischung der Komponenten eine Aktivierung und ein Aushärten des Klebstoffes erfolgt. Aufgrund der Anordnung der Austrittsöffnungen bzw. der Sollbruchstellen der Hohlkammern benachbart zueinander, insbesondere in einem Abstand kleiner 2 mm, besonders bevorzugt in einem Abstand kleiner 1 mm, wird erreicht, dass die Komponenten unmittelbar nach Austritt aus den Hohlkammern besonders gut miteinander vermischt werden. Es kann auch eine Mischkammer vorgesehen sein, in welcher Kanäle von den Hohlkammern münden.

In einer weiteren vorteilhaften Ausführungsform kann mindestens eine Hohlkammer durch eine von einem Schenkel des U-förmigen oder L-förmigen Befestigungsabschnitt vorstehende, insbesondere mitextrudierte Trennwand gebildet sein. Die Trennwand kann dabei vorzugsweise dünnwandig ähnlich einer Folie ausgebildet sein, welche gegenüber dem jeweiligen Schenkel vorsteht und den Klebstoff zumindest teilweise umschließt.

Weiter vorteilhaft kann der Befestigungsabschnitt an zwei Schenkeln, an dem Basisabschnitt und/oder einem Schenkel und dem Basisabschnitt bzw. bei einem U-förmigen Querschnitt an zwei gegenüberliegenden Schenkeln je eine Komponente eines Mehrkomponenten-Klebstoffs aufweisen. Die Komponenten treten erst dann miteinander in Kontakt, wenn der Befestigungsabschnitt auf ein Karosserieelement aufgesteckt oder daran angedrückt wird, wodurch sich auch die Komponenten vermischen.

Zusätzlich oder alternativ kann vorgesehen sein, dass ein im Querschnitt vorzugsweise U-förmiger Befestigungsabschnitt mindestens zwei Hohlkammern mit darin angeordneten Komponenten eines Mehrkomponenten-Klebstoffs aufweist, wobei die Hohlkammern vorteilhaft zumindest abschnittsweise von zwei gegenüberliegenden Schenkeln des Befestigungsabschnitts begrenzt werden. Beim Aufstecken eines derartigen Befestigungsabschnitts auf einen Karosserieflansch wird die Wand der Hohlkammer durchtrennt und die Komponenten des Mehrkomponenten-Klebstoff durchmischt.

Der Mehrkomponenten-Klebstoff kann vorzugsweise derart vorgesehen sein, dass eine erste Komponente innerhalb einer weiteren Komponente angeordnet ist. Dies kann beispielsweise dadurch erreicht werden, dass die erste Komponente in kleinen Kapseln durch eine Wand getrennt in der weiteren Komponente angeordnet ist. Solche Kapseln können beispielsweise als Glaskugeln gebildet sein, in welchen die erste Komponente angeordnet ist. Unter Druck bzw. plastischer Verformung des Klebstoffs, Bestrahlung und/oder Zuführung von elektrischer Energie und/oder Wärmeenergie brechen die Kapseln auf und es kommt zu einer Durchmischung der Komponenten des Mehrkomponenten-Klebstoffs.

Der Klebstoff bzw. eine Komponente eines Mehrkomponenten-Klebstoffs kann in einer weiteren vorteilhaften Ausführungsform direkt oder über eine Zwischenschicht außen auf einer Oberfläche des Befestigungsabschnitts angeordnet sein. Bei der Montage eines entsprechenden Dichtungsprofils muss im Unterschied zu den vorgenannten Ausführungsbeispielen keine zusätzliche Kraft aufgebracht werden, um eine den Klebstoff bzw. die Komponenten begrenzende Wand zu durchbrechen oder den Klebstoff bzw. die Komponenten aus einem Hohlraum herauszudrücken. Gegebenenfalls kann jedoch eine Schutzfolie auf dem Klebstoff bzw. den Komponenten des Mehrkomponenten-Klebstoffs vorgesehen sein, welche kurz vor der Montage entfernt wird.

Des Weiteren wird ein Verfahren zur Herstellung insbesondere des zuvor beschriebenen Dichtungsprofils beansprucht, wobei das Dichtungsprofil einen Dichtungsabschnitt und einen Befestigungsabschnitt aufweist und zumindest der Befestigungsabschnitt mittels Extrusion gebildet wird. Erfindungsgemäß wird während oder nach der Extrusion der Befestigungsabschnitt mit einem Klebstoff versehen. Die Anbringung des Klebstoffs erfolgt dabei vorzugsweise im Rahmen der Extrusion, also während der Extrusion eines als Endlosstrang ausgebildeten Dichtungsprofils oder im Anschluss hieran noch vor dem Ablängen des Dichtungsprofils, so dass sich der Klebstoff in Längsrichtung des Dichtungsprofils erstreckt. Hierdurch kann das Dichtungsprofil besonders schnell und mit wenigen Schritten hergestellt werden.

In einer bevorzugten Ausführungsform kann der Klebstoff von außen auf dem Befestigungsabschnitt aufgebracht oder in mindestens einem Hohlraum in dem Befestigungsabschnitt angeordnet werden. Die Anordnung in dem mindestens einen Hohlraum erfolgt vorteilhaft während der Extrusion in dem Extrusionswerkzeug, wobei der Klebstoff im Extrusionswerkzeug in die entsprechende Hohlkammer eingepresst wird.

Vorteilhaft kann der Klebstoff mehrere Komponenten umfassen, welche räumlich getrennt an dem Befestigungsabschnitt angeordnet werden. Es kann beispielsweise vorgesehen sein, an dem Befestigungsabschnitt mehrere Hohlkammern vorzusehen, in welche noch während der Extrusion des Befestigungsabschnitts in dem Extrusionswerkzeug die entsprechenden Komponenten des Mehrkomponenten-Klebstoffs eingepresst werden.

Es wird des Weiteren auch ein Montageverfahren für ein Dichtungsprofil, insbesondere zur Abdichtung einer Fahrzeugtür gegenüber einer Türöffnung einer Karosserie, mit einem Dichtungsabschnitt und einem Befestigungsabschnitt beansprucht. Das Montagefahren ist dadurch gekennzeichnet, dass bei der Montage des Dichtungsprofils ein Klebstoff an dem Befestigungsabschnitt aktiviert wird. Die Aktivierung kann vorzugsweise dadurch erfolgen, dass bei der Montage der Klebstoff bzw. die Komponenten eines Mehrkomponenten-Klebstoffs zur Aktivierung unter Krafteinwirkung freigesetzt und/oder durchmischt werden.

Weitere Besonderheiten und Vorzüge der Erfindung ergeben sich aus der folgenden Beschreibung bevorzugter Ausführungsbeispiele anhand der Zeichnungen. Es zeigen:
- Fig. 1a: einen Querschnitt durch eine erste Ausführungsform eines Dichtungsprofils;
- Fig. 1b: eine perspektivische Darstellung des Dichtungsprofils von Figur 1a;
- Fig. 2a: einen Querschnitt durch eine zweite Ausführungsform eines Dichtungsprofils;
- Fig. 2b: eine perspektivische Darstellung des Dichtungsprofils von Figur 2a;
- Fig. 3a: einen Querschnitt durch eine dritte Ausführungsform eines Dichtungsprofils;
- Fig. 3b: eine perspektivische Darstellung des Dichtungsprofils von Figur 3a;
- Fig. 3c: eine Detailansicht der Darstellung von Figur 3a;
- Fig. 3d: eine Detailansicht der Darstellung von Figur 3c;
- Fig. 4a: einen Querschnitt durch eine vierte Ausführungsform eines Dichtungsprofils;
- Fig. 4b: eine perspektivische Darstellung des Dichtungsprofils von Figur 4a und
- Fig. 4c: eine Detailansicht der Darstellung von Figur 4a.

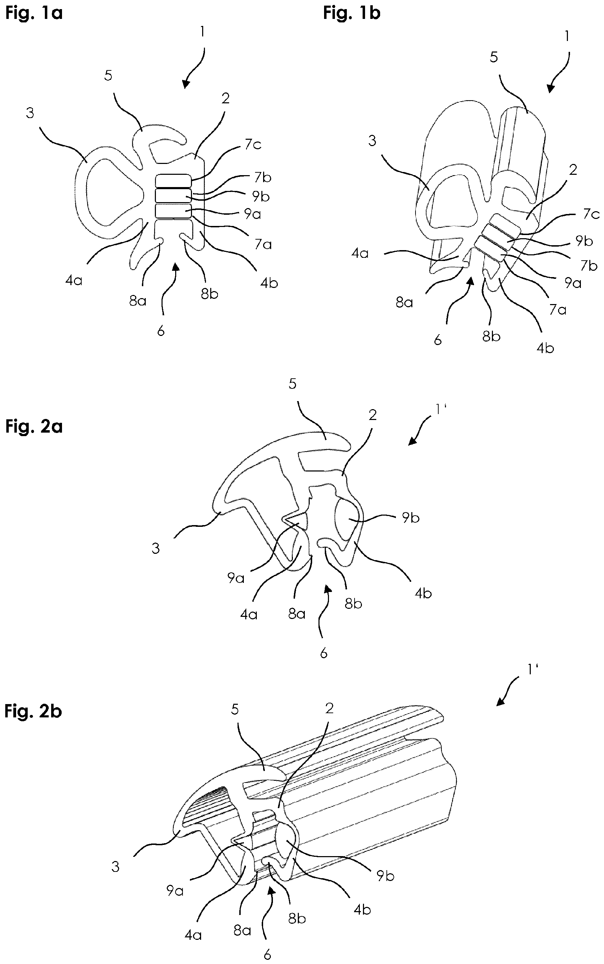

Figur 1a ist ein Querschnitt durch eine erste Ausführungsform eines Dichtungsprofils 1 zur Abdichtung eine Fahrzeugtür gegenüber einer Türöffnung einer Karosserie gezeigt. Derartige Dichtungsprofile werden wie auch die nachfolgend beschriebenen Dichtungsprofile im Extrusionsverfahren gebildet und weisen daher in Längsrichtung zumindest abschnittsweise einen gleichbleibenden Querschnitt auf.

Wie der Darstellung zu nehmen ist, umfasst das Dichtungsprofil einen U-förmigen Befestigungsabschnitt 2 und einen einstückig hiermit ausgebildeten Dichtungsabschnitt 3 in Form eines Hohlprofils. Der U-förmige Befestigungsabschnitt 2 umfasst zwei Schenkel 4a, 4b, welche über einen hier nicht bezifferten Basisabschnitt miteinander verbunden sind. Der Dichtungsabschnitt 3 ist an der Außenseite des ersten Schenkels 4a angeformt und an dem die Schenkel 4a, 4b verbindenden Basisabschnitt ist eine nach außen vorstehende Anlagelippe 5 vorgesehen.

Bei dieser Ausführungsform sind der Befestigungsabschnitt 2, der Dichtungsabschnitt 3 sowie die Anlagelippe 5 aus dem gleichen Material gebildet, beispielsweise einem thermoplastischen Elastomer wie EPDM. Es ist jedoch auch möglich, das Dichtungsprofil aus unterschiedlichen Materialien zu bilden, beispielsweise den Befestigungsabschnitt 2 mit den Schenkeln 4a, 4b und dem Basisabschnitt aus einem thermoplastischen Material wie beispielsweise Polypropylen und den Dichtungsabschnitt 3 sowie die Anlagelippe 5 aus einem thermoplastischen Elastomer wie beispielsweise EPDM. Die unterschiedlichen Materialien können durch Koextrusion in einem einzigen Extrusionschritt oder nacheinander durch Anextrudieren zu dem Dichtungsprofil zusammengefügt werden.

Der Befestigungsabschnitt 2 mit den Schenkeln 4a, 4b und dem Basisabschnitt bildet eine Aufnahmeöffnung 6 für ein Karosserieelement wie beispielsweise einen Karosserieflansch. In der Aufnahmeöffnung 6 sind drei voneinander durch dünne Trennwände beabstandete Hohlkammern 7a, 7b, 7c vorgesehen, von welchen in den benachbarten äußeren Hohlkammern 7a, 7b je eine Komponente 9a, 9b eines Mehrkomponenten-Klebstoffs angeordnet ist. Die Hohlkammer 7a, 7b werden seitlich durch die Schenkel 4a, 4b des Befestigungsabschnitts 2 begrenzt. Die Hohlkammer 7c ist am Boden der Aufnahmeöffnung 6 angeordnet und wird neben den Schenkeln 4a, 4b durch den nicht bezifferten Basisabschnitt, welcher die Schenkel 4a, 4b verbindet, begrenzt. Die Hohlkammer 7c bleibt frei und bildet eine Mischkammer für die Durchmischung der Komponenten 9a, 9b des Mehrkomponenten-Klebstoffs in den Hohlkammer 7a, 7b.

An den freien Enden der Schenkel 4a, 4b des Befestigungsabschnitts 2 sind nach innen vorstehende, vorzugsweise hakenförmige Dichtlippen 8a, 8b vorgesehen, welche zur Anlage an einem Karosseriebauteil wie einem Karosserieflansch ausgebildet sind und einen Austritt von Klebstoff aus der Aufnahmeöffnung 6 bei der Montage des Dichtungsprofils 1 verhindern.

In Figur 1b ist das Dichtungsprofil 1 von Figur 1a in einer perspektivischen Darstellung gezeigt. Wie dort zu entnehmen ist, erstreckt sich das Dichtungsprofil 1 mit konstantem Querschnitt in Längsrichtung und ist vorzugsweise durch Extrusion gebildet. Die Komponenten des Mehrkomponenten-Klebstoffs werden dabei vorteilhaft während der Extrusion des Dichtungsprofils 1 in den Hohlkammer 7a, 7b angeordnet. Dies kann beispielsweise durch ein angepasstes Extrusionswerkzeug erfolgen, bei welchem über entsprechende Kanäle die Komponenten 9a, 9b des Mehrkomponenten-Klebstoffs in die Hohlkammern 7a, 7b gedrückt werden können.

Bei der Montage des in den Figuren 1a und 1b gezeigten Dichtungsprofils 1 wird der Befestigungsabschnitt 2 mit der Aufnahmeöffnung 6 auf einen Karosserieflansch aufgesteckt. Der Karosserieflansch ist dabei derart bemessen, dass bei der Montage zumindest die Trennwände der Hohlkammern 7a, 7b aufgetrennt und die darin angeordneten Komponenten des Mehrkomponenten-Klebstoffs durchmischt werden. Wenn auch die Trennwand zu der dritten Hohlkammer 7c durchtrennt wird, kann die Hohlkammer 7c als Mischkammer für die Komponenten verwendet werden. Durch die Dichtlippen 8a, 8b wird ein Austritt des verdrängten Klebstoffs verhindert und zusätzlich ein zuverlässiges Durchmischen der Komponenten gewährleistet. Wie insbesondere in Figur 1a angedeutet ist, kann zumindest die äußere Trennwand der äußersten Hohlkammer 7a eine mittig angeordnete Sollbruchstelle aufweisen, um ein definiertes Aufbrechen während dem Aufstecken auf einen Karosserieflansch zu gewährleisten. Eine entsprechende Sollbruchstelle kann auch an den Trennwänden zwischen den Hohlkammern 7a, 7b, 7c vorgesehen sein.

In Figur 2a ist eine zweite Ausführungsform eines Dichtungsprofils 1' gezeigt. Wie auch bei den nachfolgenden Ausführungsformen sind identische bzw. ähnliche Elemente mit den gleichen Bezugszeichen versehen. Relevante Unterschiede werden anhand der konkreten Ausführungsbeispiele beschrieben.

Wie der Darstellung in Figur 2a zu entnehmen ist, umfasst das Dichtungsprofil 1' ebenfalls einen im Querschnitt U-förmigem Befestigungsabschnitt 2 mit den Schenkeln 4a, 4b, welche über einen nicht bezifferten Basisabschnitt miteinander verbunden sind. An dem ersten Schenkel 4a ist ein Dichtungsabschnitt 3 in Form eines Hohlprofils angeordnet, wobei im Unterschied zur Ausführungsform der Figuren 1a und 1b der gesamte Schenkel 4a einen Teil der Wand des Hohlprofils bildet und die Anlagelippe 5 von dem Hohlprofil vorsteht. Der Dichtungsabschnitt 3 des Dichtungsprofils 1' könnte jedoch auch wie in den Figuren 1a und 1b gezeigt ausgebildet sein. Die Ausgestaltung des Dichtungsabschnitts 3 ist grundsätzlich nicht auf eine bestimmte Ausführungsform beschränkt und es können alle beschriebenen Dichtungsabschnitte mit den Befestigungsabschnitten der verschiedenen Ausführungsformen kombiniert werden.

Bei dem Befestigungsabschnitt 2 des Dichtungsprofils 1' ist an der Innenseite jedes der Schenkel 4a, 4b je ein Klebstoff 9a, 9b vorgesehen. Ein erster Klebstoff 9a ist in einer im Querschnitt dreiecksförmigen Vertiefung des ersten Schenkels 4a angeordnet und schließt vorzugsweise bündig mit den angrenzenden Abschnitten des ersten Schenkels 4a ab. Auf der Innenseite des gegenüberliegenden Schenkels 4b ist ein zweiter Klebstoff 9b in einer hier abgerundeten Vertiefung angeordnet. Die Vertiefungen können jedoch auch spiegelbildlich ausgebildet sein. Um einen Austritt von Klebstoff zu verhindern, sind an den freien Enden der Schenkel 4a, 4b Dichtlippen 8a, 8b vorgesehen. In einer nicht gezeigten Ausführungsform kann auch nur an der Innenseite eines der Schenkel ein einziger 1 -Komponenten-Klebstoff vorgesehen sein.

Bei dem Klebstoff 9a, 9b kann es sich um Komponenten eines Mehrkomponenten-Klebstoff oder auch jeweils um einen 1-Komponenten-Klebstoff handeln. Der Klebstoff 9a, 9b ist derart in den seitlichen Vertiefungen angeordnet, dass bei einem Aufstecken des Befestigungsabschnitts 2 auf einen Karosserieflansch der Klebstoff 9a, 9b nicht oder nur geringfügig verdrängt wird. Zu einem großflächigen Kontakt mit dem Karosserieflansch kommt es erst, wenn seitlich Druck auf die Schenkel 4a, 4b aufgebracht wird, beispielsweise über eine Andrückrolle. Es kann auch vorgesehen sein, dass der entsprechende Klebstoff 9a, 9b erst unter Druck und/oder Wärmeeinfluss/Strahlung (z.B. UV-Licht) und/oder nach Abziehen einer Schutzfolie und Kontakt mit der Umgebungsluft (beispielsweise Sauerstoff, Feuchtigkeit etc.) aktiviert wird und zeitnah aushärtet. In der Ausführungsform, in welcher die Klebstoffe 9a, 9b des Dichtungsprofils 1' die Komponenten eines Mehrkomponenten-Klebstoffs bilden, vermischen sich diese unter Druck auf die Schenkel 4a, 4b und werden hierdurch aktiviert bzw. härten aus.

Die Klebstoffe 9a, 9b können wie gezeigt direkt oder über eine vorzugsweise koextrudierte Zwischenschicht, insbesondere eine im Vergleich zum Material des Befestigungsabschnitts weichere Zwischenschicht wie einem geschäumten Kunststoff, auf der Oberfläche des Befestigungsabschnitts 2 angeordnet sein. Gleichermaßen kann auch bei der nicht gezeigten Ausführungsform der 1-Komponenten-Klebstoff an einem Schenkel eines U-förmigen oder L-förmigen Befestigungsabschnitts oder an dem Basisabschnitt direkt oder über eine entsprechende Zwischenschicht angeordnet sein.

In Figur 2b ist eine perspektivische Darstellung des Dichtungsprofil 1 ` von Figur 2a gezeigt. Wie dort zu nehmen ist, erstreckt sich das Dichtungsprofils 1' in Längsrichtung mit konstantem Querschnitt. Ebenso sind auch die Klebstoffe 9a, 9b entlang der entsprechenden Vertiefungen in den Schenkeln 4a, 4b vorgesehen, um eine vollflächige Verklebung in Längsrichtung zu ermöglichen. Die Klebstoffe 9a, 9b können noch während der Extrusion des Dichtungsprofils 1' in den Vertiefungen angeordnet oder nachträglich aufgebracht werden. Ebenfalls kann zum Schutz der Klebstoffe 9a, 9b vor Verschmutzung oder einer frühzeitigen Reaktion mit Umgebungsluft eine nicht gezeigte Abdeckung wie beispielsweise eine Abdeckfolie auf die Klebstoffe 9a, 9b aufgebracht werden, welche erst kurz vor der Montage des Dichtungsprofils 1' entfernt wird.

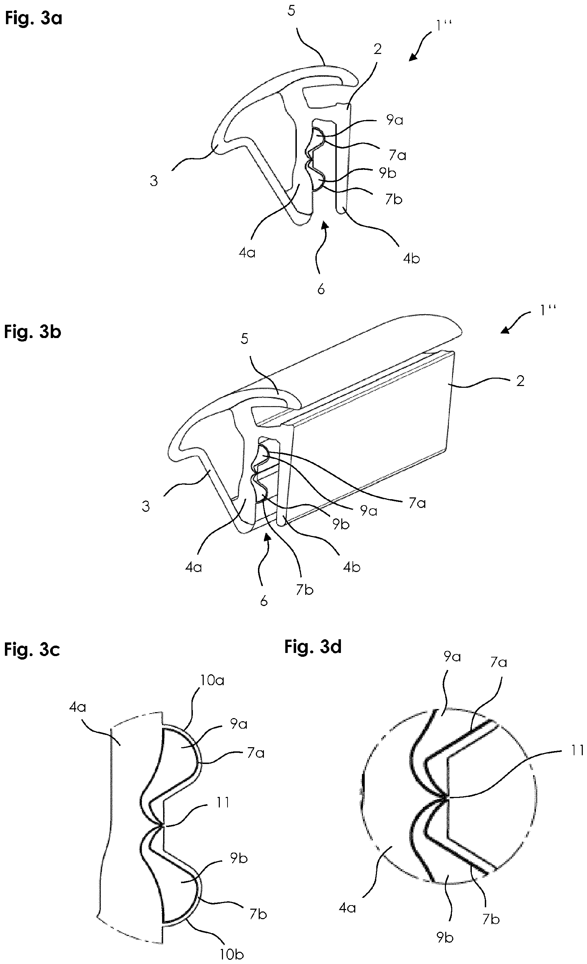

In Figur 3a ist ein Querschnitt durch eine dritte Ausführungsform eines Dichtungsprofils 1 " gezeigt. Im Unterschied zu den vorgenannten Ausführungsbeispielen ist der Befestigungsabschnitt 2 und der Dichtungsabschnitt 3 aus unterschiedlichen Komponenten gebildet, welche vorzugsweise im Koextrusionverfahren verbunden wurden. Eine entsprechende Ausgestaltung mit mehreren Komponenten kann jedoch auch bei den weiteren Ausführungsbeispielen vorgesehen sein und ist nicht auf diese Ausführungsform beschränkt.

Der Befestigungsabschnitt 2 mit den Schenkeln 4a, 4b, dem die Schenkel 4a, 4b verbindenden Basisabschnitt und einem vorstehenden Abschnitt als Teil der Anlagelippe 5 kann aus einem thermoplastischen Material wie Polypropylen (PP) und/oder der Dichtungsabschnitt 3 aus einem thermoplastischen Elastomer wie beispielsweise EPDM gebildet sein. Im Unterschied zu den vorgenannten Ausführungsformen ist bei der Ausführungsform von Figur 3a lediglich an der Innenseite des ersten Schenkels 4a des Befestigungsabschnitts 2 Klebstoff 9a, 9b vorgesehen. Hierbei handelt es sich um zwei Komponenten 9a, 9b eines Mehrkomponenten-Klebstoffs, wobei je eine Komponente in einer entsprechenden Hohlkammer 7a, 7b in dem ersten Schenkel 4a angeordnet ist. Die konkrete Ausgestaltung wird anhand von Detailzeichnungen in den Figuren 3c und 3d im nachfolgenden noch genauer beschrieben. Anders als bei den zuvor beschriebenen Ausführungsformen sind bei dieser Ausführungsform keine Dichtlippen an den freien Enden der Schenkel 4a, 4b vorgesehen, es können jedoch auch hier entsprechende Dichtlippen vorgesehen sein.

In Figur 3b ist eine perspektivische Darstellung des Dichtungsprofils 1" von Figur 3a gezeigt. Wie aus der Darstellung hervorgeht, weist das Dichtungsprofil 1" als Extrusionsprofil in Längsrichtung einen konstanten Querschnitt auf, wobei sich die Komponenten 9a, 9b des Mehrkomponenten-Klebstoffs ebenfalls in Längsrichtung erstrecken. Die Einbringung der Komponenten 9a, 9b in die entsprechenden Hohlkammern 7a, 7b erfolgt vorzugsweise noch im Extrusionswerkzeug bei der Herstellung des Dichtungsprofils 1".

In Figur 3c ist eine Detailansicht der Darstellung von Figur 3a im Bereich der Hohlkammern 7a, 7b gezeigt. Wie dort zu nehmen ist, sind die Komponenten 9a, 9b in je einer Hohlkammer 7a, 7b in dem ersten Schenkel 4a angeordnet und in Richtung der Innenseite der Aufnahmeöffnung 6 durch eine dünne Trennwand 10a, 10b des ersten Schenkels 4a abgedeckt. Jede Hohlkammer 7a, 7b steht nach innen in die Aufnahmeöffnung 6 vor, so dass die Hohlkammern 7a, 7b beim Aufstecken des Befestigungsabschnitts 2 auf ein Karosserieteil wie einem Karosserieflansch zusammengedrückt werden. Zudem weisen die Hohlkammern 7a, 7b eine gemeinsame Austrittsöffnung 11 auf, durch welche bei Druck auf die Hohlkammern 7a, 7b die Komponenten 9a, 9b des Mehrkomponenten-Klebstoffs gemeinsam austreten können. Wie insbesondere der weiteren Detailansicht in Figur 3d zu entnehmen ist, münden Kanäle der zwei Hohlkammer 7a, 7b vor der Austrittsöffnung 11 ineinander, so dass es vor einem Austritt zu einer Durchmischung der Komponenten 9a, 9b kommt, wodurch der Klebstoff 9a, 9b aktiviert wird und zeitnah aushärtet.

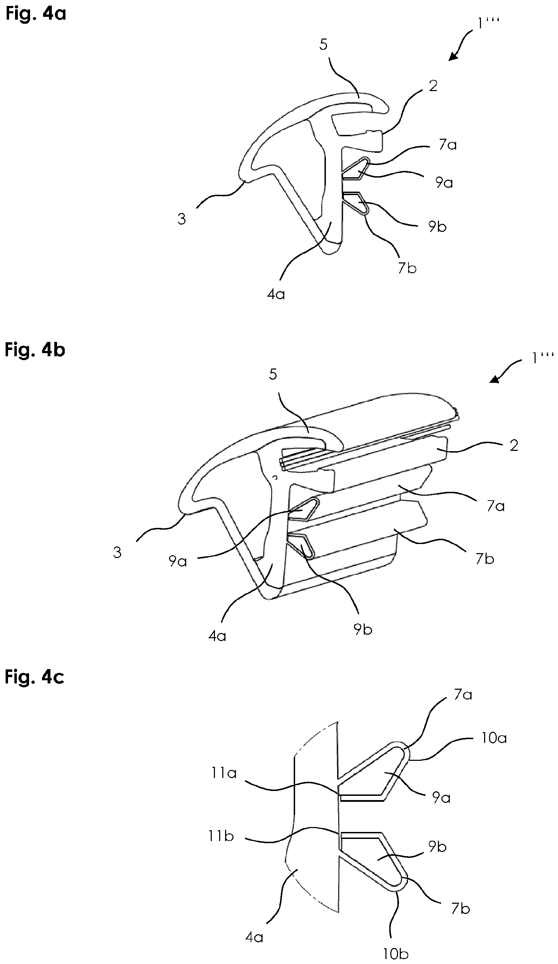

In Figur 4a ist eine vierte Ausführungsform eines Dichtungsprofils 1‴ gezeigt. Im Unterschied zu der zuvor beschriebenen Ausführungsform ist der Befestigungsabschnitt 2 im Querschnitt L-förmig ausgebildet und umfasst den Schenkel 4a sowie einen hiervon seitlich vorstehenden, nicht bezifferten Basisabschnitt. Von dem Schenkel 4a stehen nach außen über je eine dünne Trennwand begrenzte Hohlkammern 7a, 7b vor, in welchen jeweils eine Komponente 9a, 9b eines Mehrkomponenten-Klebstoff angeordnet ist. Die konkrete Ausgestaltung wird in Bezug auf Figur 4c im Detail beschrieben.

In Figur 4b ist eine perspektivische Darstellung des Dichtungsprofils 1‴ von Figur 4a gezeigt. Wie dort zu nehmen ist, ist das Dichtungsprofil 1‴ als Extrusionsprofil mit in Längsrichtung konstantem Querschnitt ausgebildet, wobei sich auch die Hohlkammern 7a, 7b mit den darin angeordneten Komponenten 9a, 9b des Mehrkomponenten-Klebstoffs in Längsrichtung erstrecken.

In Figur 4c ist eine Detailansicht der Darstellung von Figur 4a im Bereich der Hohlkammern 7a, 7b gezeigt. Die Hohlkammern 7a, 7b sind spiegelbildlich ausgebildet und werden durch Trennwände 10a, 10b begrenzt, welche von dem Schenkel 4a nach außen vorstehen. Auf einer zueinander zugewandten Seite weisen die Trennwände 10a, 10b jeweils eine Austrittsöffnung 11a, 11b für die Komponenten 9a, 9b des Mehrkomponenten-Klebstoffs auf. Anstelle der Austrittsöffnungen 11a, 11b könnte auch je eine Sollbruchstelle vorgesehen sein. Unter Druck verformen sich die Hohlkammern 7a, 7b, so dass die Komponenten 9a, 9b durch die Austrittsöffnungen 11a, 11b hindurch austreten und sich vermischen können, wodurch der Klebstoff aktiviert wird und zeitnah aushärtet. Bei der gezeigten Ausgestaltung ist vorgesehen, dass sich durch den Druck beim Andrücken des Befestigungsabschnitts 2 an ein Karosserieelement wie einem Karosserieflansch die Hohlkammern 7a, 7b verformen und dabei die Austrittsöffnungen 11a, 11b aufweiten, um mit geringem Widerstand ein schnelles Entleeren der Hohlkammern 7a, 7b zu ermöglichen.

Bei den beschriebenen Ausführungsbeispielen wird das Dichtungsprofil bevorzugt mittels Extrusion gebildet und der Klebstoff bzw. die Komponenten des Mehrkomponenten-Klebstoffs werden während oder nach der Extrusion auf den Befestigungsabschnitt aufgebracht oder in entsprechenden Hohlkammern in dem Befestigungsabschnitt angeordnet. Vorteilhaft erfolgt das Hinzufügen des Klebstoffs bzw. der Komponenten des Mehrkomponenten-Klebstoffs jedoch noch an dem Endlosprofil vor einem Abtrennen von einzelnen Dichtungen. Bei der Montage kann der Klebstoff bzw. die Komponenten des Mehrkomponenten-Klebstoffs dann vorzugsweise dadurch aktiviert werden, dass dieser durch Druck unter Krafteinwirkung freigesetzt und/oder durchmischt wird.

Die in den Figuren gezeigten und beschriebenen Ausführungsformen stellen lediglich beispielhafte Ausgestaltungen dar, wobei insbesondere die Anordnung der Klebstoffe bzw. Klebstoffkomponenten in den U-förmigen oder L-förmigen Befestigungsabschnitten sowie die Ausgestaltung der Hohlkammern, der Befestigungsabschnitte und der Dichtungsabschnitte frei kombinierbar sind. Auch ist es möglich, bei den gezeigten Ausführungsformen anstelle der voneinander beabstandet angeordneten Komponenten eines Mehrkomponenten-Klebstoffs jeweils einen 1-Komponenten-Klebstoff vorzusehen oder eine Komponente in der anderen Komponente anzuordnen, beispielsweise in Glaskugeln. Als weitere Alternative kann eine Komponente eines Mehrkomponenten-Klebstoffs an der Fahrzeugkarosserie, beispielsweise dem Karosserieflansch, und eine weitere Komponente an dem Dichtungsprofil vorgesehen sein.

### Bezugszeichenliste:

- 1, 1', 1", 1‴: Dichtungsprofil
- 2: Befestigungsabschnitt
- 3: Dichtungsabschnitt
- 4a, 4b: Schenkel des Befestigungsabschnitts
- 5: Anlagelippe
- 6: Aufnahmeöffnung
- 7a, 7b, 7c: Hohlkammern
- 8a, 8b: Dichtlippen
- 9a, 9b: Klebstoff
- 10a, 10b: Trennwand
- 11, 11a, 11: b Austrittsöffnung

## Patentansprüche

1. Dichtungsprofil (1; 1'; 1 "; 1‴), insbesondere zur Abdichtung einer Fahrzeugtür gegenüber einer Türöffnung einer Karosserie, mit einem Befestigungsabschnitt (2) und mindestens einem Dichtungsabschnitt (3),
**dadurch gekennzeichnet,**
**dass** der Befestigungsabschnitt (2) einen Klebstoff (9a; 9b) aufweist.

2. Dichtungsprofil (1; 1'; 1 "; 1‴) nach Anspruch 1,
**dadurch gekennzeichnet,**
**dass** der Klebstoff (9a; 9b) ein 1-Komponenten-Klebstoff oder ein Mehrkomponenten-Klebstoff mit räumlich getrennt angeordneten Komponenten ist.

3. Dichtungsprofil (1; 1'; 1 "; 1‴) nach Anspruch 1 oder 2,
**dadurch gekennzeichnet,**
**dass** der Befestigungsabschnitt (2) im Querschnitt U-förmig oder L-förmig ausgebildet ist und der Klebstoff (9a; 9b) an der Innenseite eines Schenkels (4a; 4b) vorgesehen ist.

4. Dichtungsprofil (1; 1 "; 1‴) nach einem der Ansprüche 1 bis 3,
**dadurch gekennzeichnet,**
**dass** der Befestigungsabschnitt (2) mindestens eine Hohlkammer (7a; 7b) aufweist, in welcher der Klebstoff bzw. eine Klebstoffkomponente (9a; 9b) angeordnet ist.

5. Dichtungsprofil (1; 1 "; 1‴) nach Anspruch 4,
**dadurch gekennzeichnet,**
**dass** die Hohlkammer (7a; 7b) eine Austrittsöffnung (11; 11a; 11b) oder eine Sollbruchstelle für den Austritt des Klebstoffs (9a; 9b) aufweist.

6. Dichtungsprofil (1; 1 "; 1‴) nach Anspruch 5,
**dadurch gekennzeichnet,**
**dass** jede Hohlkammer (7a; 7b) eine Austrittsöffnung oder eine Sollbruchstelle aufweist, welche in einander zugewandten Wandabschnitten der Hohlkammern (7a; 7b) angeordnet sind.

7. Dichtungsprofil (1') nach einem der Ansprüche 3 bis 6,
**dadurch gekennzeichnet,**
**dass** an zwei vorzugsweise gegenüberliegenden Schenkeln (4a; 4b) des Befestigungsabschnitts (2) je eine Komponente (9a; 9b) eines Mehrkomponenten-Klebstoffs oder an einem Schenkel ein 1-Komponenten-Klebstoff angeordnet ist.

8. Dichtungsprofil (1; 1 "; 1‴) nach einem der Ansprüche 3 bis 7,
**dadurch gekennzeichnet,**
**dass** der Befestigungsabschnitt (2) mindestens zwei Hohlkammern (7a; 7b) mit darin angeordneten Komponenten (9a; 9b) eines Mehrkomponenten-Klebstoffs umfasst, wobei die Hohlkammern (7a; 7b) zumindest abschnittsweise von zwei gegenüberliegenden Schenkeln (4a; 4b) des Befestigungsabschnitts (2) begrenzt werden.

9. Dichtungsprofil nach einem der vorhergehenden Ansprüche,
**dadurch gekennzeichnet,**
**dass** eine Komponente des Mehrkomponenten-Klebstoffs in einer weiteren Komponente des Mehrkomponenten-Klebstoffs angeordnet ist.

10. Dichtungsprofil (1') nach einem der vorhergehenden Ansprüche,
**dadurch gekennzeichnet,**
**dass** Klebstoff (9a; 9b) bzw. eine Komponente eines Mehrkomponenten-Klebstoffs direkt oder über eine Zwischenschicht außen auf einer Oberfläche des Befestigungsabschnitts (2) angeordnet ist.

11. Verfahren zur Herstellung eines Dichtungsprofils (1; 1 '; 1 "; 1‴), insbesondere eines Dichtungsprofils nach einem der Ansprüche 1 bis 10, mit einem Dichtungsabschnitt (3) und einem Befestigungsabschnitt (2), wobei zumindest der Befestigungsabschnitt (2) mittels Extrusion gebildet wird,
**dadurch gekennzeichnet,**
**dass** während oder nach der Extrusion der Befestigungsabschnitt (2) mit einem Klebstoff (9a; 9b) versehen wird.

12. Verfahren nach Anspruch 11,
**dadurch gekennzeichnet,**
**dass** der Klebstoff (9a; 9b) von außen auf den Befestigungsabschnitt (2) aufgebracht oder in mindestens einem Hohlraum (7a; 7b) in dem Befestigungsabschnitt (2) angeordnet wird.

13. Verfahren nach Anspruch 11 oder 12,
**dadurch gekennzeichnet,**
**dass** der Klebstoff mehrere Komponenten (9a; 9b) umfasst, welche räumlich getrennt an dem Befestigungsabschnitt (2) angeordnet werden.

14. Montageverfahren für ein Dichtungsprofil (1; 1 '; 1 "; 1‴), insbesondere zur Abdichtung einer Fahrzeugtür gegenüber einer Türöffnung einer Karosserie, mit einem Dichtungsabschnitt (3) und einem Befestigungsabschnitt (2)
**dadurch gekennzeichnet,**
**dass** bei der Montage des Dichtungsprofils (1; 1'; 1 "; 1‴) ein Klebstoff an dem Befestigungsabschnitt (2) aktiviert wird.

15. Montageverfahren nach Anspruch 14,
**dadurch gekennzeichnet,**
**dass** der Klebstoff bzw. die Komponenten (9a; 9b) eines Mehrkomponenten-Klebstoffs zur Aktivierung bei der Montage unter Krafteinwirkung freigesetzt und/oder durchmischt werden.
